# EUROPEAN PATENT SPECIFICATION

(11) **EP 1 818 187 B1**
(45) Date of publication and mention of the grant of the patent: **18.08.2010**
(21) Application number: 05811376.2
(22) Date of filing: 30.11.2005
(51) Int. Cl.: B60C 5/14, B32B 25/18, C09J 107/00, C09J 109/00, C09J 123/28, C09J 123/34

(54) **LAMINATE, METHOD FOR PRODUCING THE SAME AND TIRE USING THE SAME**
LAMINAT, VERFAHREN ZUR HERSTELLUNG DESSELBEN UND DAS LAMINAT VERWENDENDER REIFEN
STRATIFIE, SON PRODEDE DE PRODUCTION ET PNEU L'UTILISANT

(30) Priority: 03.12.2004 JP 2004351829; 10.12.2004 JP 2004359001; 06.10.2005 JP 2005294188
(43) Date of publication of application: 15.08.2007
(73) Proprietor: Bridgestone Corporation, Tokyo 104-8340 (JP)
(72) Inventor: NOHARA, Daisuke, c/o Bridgestone Corporation, Kodaira-shi, Tokyo 1878531 (JP); KATO, Daisuke, c/o Bridgestone Corporation, Kodaira-shi, Tokyo 1878531 (JP); TAKAHASHI, Yuwa, c/o Bridgestone Corporation, Kodaira-shi, Tokyo 1878531 (JP)
(74) Representative: Whalley, Kevin
(86) International application number: PCT/JP2005/021952
(87) International publication number: WO 2006/059621

(56) References cited:
- EP-A- 0 774 340
- EP-A- 1 418 199
- WO-A1-96/34736
- JP-A- 6 040 207
- JP-A- 07 502 064
- JP-A- 09 505 842
- JP-A- 11 240 108
- JP-A- 2002 103 468
- JP-A- 2002 103 468
- JP-A- 2004 176 048
- JP-A- 2004 196 254
- US-A- 5 281 638

## Description

### Technical Field

The present invention relates to a laminate, a method of producing the same, and a tire using the same. More particularly, the present invention relates to a laminate that includes a resin film layer and a rubbery elastomer layer bound and integrated through an adhesive layer and that can be produced with good workability, has excellent resistance to peeling, and can be advantageously used as an inner liner for a pneumatic tire, also relates to a method of producing the same efficiently, and to a tire using such a laminate.

### Background Art

Conventionally, an inner surface of a pneumatic tire is provided an inner liner layer composed mainly of butyl rubbers having a low gas permeability, such as butyl rubber or halogenated butyl rubber in order to prevent leakage of air and maintain the air pressure of the time. However, there arises the problem that an increasing content of the butyl rubber leads to a decrease in strength of unvulcanized rubber, so rubber cutting or perforation of sheet tends to occur. In particular, when the inner liner is made to have a small thickness, a cord inside a tire is easy to be exposed upon production of the tire.
Accordingly, the blending amount of the butyl rubber is naturally limited. When a rubber composition in which the butyl rubber is blended is used, the thickness of the inner liner layer should be around 1 mm from the viewpoint of air barrier properties. As a result, the weight of the inner liner layer that occupies the tire is about 5%, which is an obstacle to decreasing the weight of the tire to improve the fuelconsumption of a car.
Therefore, in response to an increasing popular request for saving energy in recent years, a technique for thinned gauge an inner liner layer with a view to achieving weight reduction has been proposed.
For example, there has been disclosed a technique in which a nylon film layer or a vinylidene chloride film layer instead of a conventional butyl rubber layer is used as an inner liner layer (see, for example, Patent Documents 1 and 2). Also, there has been disclosed the use of a film of a composition consisting of a blend of a thermoplastic resin such as polyamide resins or polyester resins and an elastomer as an inner liner layer (see, for example, Patent Document 3).

However, the methods using those films can achieve weight reduction of a tire to some extent. Because matrix materials are crystalline resins, the methods have defects that matrix materials are crystalline resins, have crack resistance and bending fatigue resistance, in particular those when used at low temperatures of 5°C or less, inferior to those of commonly used butyl rubber-blended composition layers, and production of tire becomes complex.
On the other hand, ethylene-vinyl alcohol copolymer (hereinafter, sometimes abbreviated as "EVOH") is known to have excellent gas barrier performance. EVOH has air permeability at most as 1/100 fold as that of an inner liner rubber composition in which butyl rubber is blended, so EVOH can greatly improve inner pressure retainabilities even at a thickness of 50 µm or less. In addition, EVOH can decrease the weight of the tire. Therefore, it is useful to use EVOH for an inner liner in order to improve the air permeability of the pneumatic tire. For example, a pneumatic tire having a tire inner liner composed of EVOH has been disclosed (see, for example, Patent Document 4).

However, when the EVOH is used as an inner liner, a great effect of improving the inner pressure retainabilities is obtained. However, because EVOH has an elastic modulus much higher than that of the rubber used in a conventional tire, the tire may cause breakage or cracking by deformation upon bending. For this reason, when an inner liner made of EVOH is used, there occurs the problem; the inner pressure retainability of a tire before use is greatly improved. However, the tire subjected to bending deformation upon rolling after the use may have decreased inner pressure retainability as compared with that before use.
To solve this problem, there has been disclosed an inner liner for an internal surface of a tire, the inner liner being made of a resin composition consisting of, for example, 60 to 99 wt% of an ethylene-vinyl alcohol copolymer having an ethylene content of 20 to 70 mol% and a saponification degree of 85% or more, and 1 to 40 wt% of a hydrophobic plasticizer (see, for example, Patent Document 5). However, the inner liner does not have a sufficient bending resistance.
Therefore, development of an inner liner that has high bending resistance while retaining gas barrier performance and permits thinned gauge has been desired.
As such an inner liner, for example, a laminate of a rubber elastomer film or sheet having excellent bending resistance and a resin film having good gas barrier performance bound and integrated is conceivable. In this case, goodworkability during the production process of the laminate and excellent peeling resistance are required.

Patent Document 1: JP 07-40702 A
Patent Document 2: JP 07-81306 A
Patent Document 3: JP 10-26407 A
Patent Document 4: JP 06-40207 A
Patent Document 5: JP 2002-52904 A

### Disclosure of the Invention

Under the circumstances, it is an object of the present invention to provide a laminate that can be advantageously used as an inner liner permitting thinned gauge, includes a resin film layer and a rubber elastomer layer bound and integrated, can be produced with good workability, and has excellent peeling resistance, a method of producing the laminate, and a tire using the laminate.
The inventors of the present invention have made extensive studies to achieve the above-mentioned object. As a result, they have found that the object can be achieved by a laminate that includes a layer having at least a resin film layer and a rubber elastomer layer, and the layer and the rubber elastomer layer being bound and integrated through an adhesive layer made of an adhesive composition having a specified composition. The present invention has been accomplished based on such finding.
That is, the present invention provides:
(1) a laminate including a layer containing at least a resin film (A) and a rubber elastomer layer (B), bound and integrated through an adhesive layer (C), in which the adhesive composition that constitutes the adhesive layer (C) has a composition containing a rubber component (a), and 0.1 mass part of at least one of poly-p-dinitrosobenzene and 1,4-phenylenedimaleimide per 100 mass parts of the rubber component (b) as a crosslinking agent or a cross-linking aid;
(2) the laminate according to Item 1, in which the adhesive composition includes 2 to 50 mass parts of a filler (c);
(3) the laminate according to Item 1 or 2, in which the adhesive composition includes 10 mass% or more of chlorosulfonated polyethylene as the rubber component (a);
(4) the laminate according to any one of Items 1 to 3, in which the adhesive composition further includes 50 mass% or more of butyl rubber and/or halogenated butyl rubber as the rubber component (a) ;
(5) the laminate according to any one of Items 1 to 4, in which the adhesive composition further includes 0.1 mass part or more of a vulcanization accelerator for rubber (d);
(6) the laminate according to any one of Item 5, in which the vulcanization accelerator for rubber (d) is thiuram and/or substituted dithiocarbamate vulcanization accelerators;
(7) the laminate according to any one of Items 1 to 6, in which the adhesive composition further includes 0.1 mass% or more of at least one of a resin and a low molecular weight polymer (e);
(8) the laminate according to any one of Items 1 to 7, in which the adhesive composition includes 5 mass parts or more of an inorganic filler as the filler (c);
(9) the laminate according to Item 8, in which the inorganic filler is at least one selected from the group consisting of silica obtained by a wet process, aluminum hydroxide, aluminum oxide, magnesium oxide, montmorillonite, mica, smectite, organized montmorillonite, organized mica, and organized smectite;
(10) the laminate according to any one of Items 1 to 9, in which the adhesive composition includes a carbon black as the filler (c);
(11) the laminate according to any one of Items 7 to 10, in which the resin in the component (e) is selected from the group consisting of C₅-fraction based resins, phenol based resins, terpene based resins, modified terpene based resins, hydrogenated terpene based resins, and rosin based resins;
(12) the laminate according to Item 11, in which the resin is a phenol resins;
(13) the laminate according to any one of Items 7 to 12, in which the low molecular weight polymer in the component (e) has a weight average molecular weight of 1,000 to 100,000 as the value of corresponding polystyrene as the reference;
(14) the laminate according to Item 13, in which the low molecular weight polymer has a weight average molecular weight of 1,000 to 50,000 as the value of corresponding polystyrene as the reference.;
(15) the laminate according to any one of Items 7 to 14, in which the low molecular weight polymer in the component (e) is a polymer having a double bond in the molecule;
(16) the laminate according to any one of Items 7 to 15, in which the low molecular weight polymer in the component (e) is a polymer having a unit of styrene;
(17) the laminate according to Item 16, in which the low molecular weight polymer is styrene-butadiene copolymer;
(18) the laminate according to any one of Items 1 to 17, in which the layer containing at least a resin film layer (A) has a thickness of 200 µm or less and the rubber elastomer layer (B) has a thickness of 200 µm or more;
(19) the laminate according to any one of Items 1 to 18, in which the layer containing at least a resin film layer (A) is made of a single layer or a multilayer film layer containing one or more layers of modified ethylene-vinyl alcohol copolymer;
(20) the laminate according to Item 19, in which the layer containing at least a resin film layer (A) is a layer made of a multilayer film containing a thermoplastic urethane elastomer layers;
(21) the laminate according to any one of Items 1 to 20, in which the rubber elastomer that constitutes the rubber elastomer layer (B) contains a rubber component that contains 50 mass% or more of butyl rubber;
(22) the laminate according to Item 21, in which the butyl rubbers are butyl rubbers and/or halogenated butyl rubbers;
(23) the laminate according to any one of Items 1 to 22, in which the thickness of the adhesive layer (C) is 1 to 100 µm;
(24) a method of producing a laminate according to any one of Items 1 to 23, including the method of coating a coating solution including an adhesive composition containing an organic solvent on a surface of a film containing at least a resin film layer, drying the coating, applying a rubber elastomer film or sheet on the dried coating, and heating and vulcanizing the rubber elastomer film or sheet;
(25) a method of producing the laminate according to any one of Items 1 to 23, including the method of coating a coating solution including an adhesive composition containing an organic solvent on a surface of a rubber elastomer film or sheet, drying the coating, applying a film containing at least a resin film layer on the dried coating, and heating and the vulcanizing the rubber elastomer film;
(26) the method of producing the laminate according to Item 24 or 25, in which the organic solvent has a Hildebrand solubility parameter δ in the range of 14 to 20 Mpa^{1/2};
(27) the method of producing the laminate according to any one of Items 24 to 26, in which the heating and vulcanizing are performed at a temperature of 120°C or more; and
(28) a tire including the laminate according to any one of Items 1 to 23.

### Brief Description of the Drawings

[Fig. 1] A partial cross-sectional view illustrating an example of a tire of the present invention.
[Fig. 2] A detailed cross-sectional view illustrating an example of the construction of a laminate of the present invention.

### Description of Symbols

1: Bead core
2: Carcass layer
3: Inner liner layer (Laminate of the present invention)
4: Belt layer
5: Tread section
6: Side wall section
7: Bead filler
11: Modified ethylene-vinyl alcohol copolymer layer
12a 12b Laminated thermoplastic urethane elastomer layer
13: Layer containing a resin film
14: Adhesive layer
15: Rubber elastomer layer

### Best Mode for carrying out the Invention

The laminate of the present invention has a structure in which a layer having at lest a resin film (A) and a rubber elastomer layer (B) bound and integrated through an adhesive layer (C).
The resin film which constitutes the layer (A) in the laminate of the present invention may be any resin layer as far as the resin layer has good gas barrier performance and suitable mechanical strength and various resin films can be used without particular limitation. Examples of the material of the resin film include polyamide based resins, polyvinylidene chloride based resins, polyester based resins, and ethylene-vinyl alcohol copolymer based resins. Among these, the ethylene-vinyl alcohol copolymer based resins have extremely low air permeabilities and excellent gas barrier performance and hence are preferable. These may be used singly or two or more kinds of ethylene-vinyl alcohol copolymer resins may be used in combination. Further, the resin film fabricated by using the materials may be a single layer film or a multilayer film having two or more layers.

A particularly preferable example of the ethylene-vinyl alcohol copolymer based resins is a modified ethylene-vinyl alcohol copolymer obtained by reacting an ethylene-vinyl alcohol copolymer with an epoxy compound. Modification in this manner results in a decrease in elastic modulus of the unmodified ethylene-vinyl alcohol copolymer to a greater extent to thereby improve breakability upon bending and degree of occurrence of cracks.
Preferably, the ethylene-vinyl alcohol copolymer used in this modification treatment has an ethylene unit content of 25 to 50 mol%. To obtain good bending resistance and fatigue resistance, the ethylene unit content of the ethylene-vinyl alcohol copolymer is more preferably 30 mol% or more, and still more preferably 35 mol% or more. For the gas barrier performance, the ethylene unit content of the ethylene-vinyl alcohol copolymer is more preferably 48 mol% or less, and still more preferably 45 mol% or less. If the ethylene-vinyl alcohol copolymer has an ethylene unit content of less than 25 mol%, the copolymer may have not only decreased bending resistance and fatigue resistance but also decreased melt moldability. On the other hand, if the ethylene-vinyl alcohol copolymer has an ethylene unit content of more than 50 mol%, the copolymer may have insufficient gas barrier performance.
Further, the ethylene-vinyl alcohol copolymer has a degree of saponification of preferably 90 mol% or more, more preferably 95 mol% or more, still more preferably 98 mol% or more, and most preferably 99 mol% or more. If the ethylene-vinyl alcohol copolymer has a degree of saponification of less than 90 mol%, the copolymer may have insufficient gas barrier performance and insufficient thermal stability upon fabrication of the laminate.

A melt flow rate (MFR) (at 190°C under load of 21.18 N) of the ethylene-vinyl alcohol copolymer used for modification treatment is preferably 0.1 to 30 g/10 minutes, and more preferably 0.3 to 25 g/10 minutes. However, the ethylene-vinyl alcohol copolymer having a melting point in the vicinity of 190°C or above 190°C is measured under a load of 21. 18 N at a plurality of temperatures higher than the melting point. The measured values are plotted on a single logarithmic chart with a reciprocal of absolute temperature on an abscissa axis and a logarithm of MFR on an ordinate axis. The melt flow rate is expressed as a value extrapolated at 190°C.
The modification treatment can be performed by reacting 100 mass parts of the unmodified ethylene-vinyl alcohol copolymer with preferably 1 to 50 mass parts, more preferably 2 to 40 mass parts, and still more preferably 5 to 35 mass parts of the epoxy compound. In this case, it is advantageous to use an appropriate solvent and carry out the reaction in a solution.

In the modification treatment by solution reaction, a solution of an ethylene-vinyl alcohol copolymer is reacted with an epoxy compound in the presence of an acid catalyst or an alkali catalyst to obtain a modified ethylene-vinyl alcohol copolymer. Preferable examples of the reaction solvent include polar aprotic solvents that are good solvents for the ethylene-vinyl alcohol copolymers, such as dimethyl sulfoxide, dimethylformamide, dimethylacetamide, and N-methylpyrrolidone. The reaction catalysts include acid catalysts such as p-toluenesulfonic acid, methanesulfonic acid, trifluoromethanesulfonic acid, sulfuricacid and trifluoroboric acid and alkali catalysts such as sodium hydroxide, potassium hydroxide, lithium hydroxide, and sodium methoxide. Among those, it is preferable to use acid catalysts. The amount of the catalyst is suitably around 0.0001 to 10 mass parts per 100 mass parts of the ethylene-vinyl alcohol copolymer. Further, the modified ethylene-vinyl alcohol copolymer can be produced by dissolving an ethylene-vinyl alcohol copolymer and an epoxy compound in a reaction solvent and heating the resultant solution.

The epoxy compound used in the modification treatment is not particularly limited and preferably is a monovalent epoxy compound. When the epoxy compound used is a divalent or more epoxy compound, crosslinking reaction with the ethylene-vinyl alcohol copolymer takes place to produce gel or agglomerate, which may deteriorate the quality of the resultant laminate. From the viewpoints of ease of production of modified ethylene-vinyl alcohol copolymer as well as gas barrier performance, bending resistance and fatigue resistance of the product, preferable examples of the monovalent epoxy compound include glycidol and epoxypropane.
The melt flow rate (MFR) (at 190°C under load of 21.18 N) of the modified ethylene-vinyl alcohol copolymer of the present invention is not particularly limited but from the viewpoints of obtaining good gas barrier performance, bending resistance and fatigue resistance of the product, the melt flow rate is preferably 0.1 to 30 g/10 minutes, more preferably 0.3 to 25 g/10 minutes, and still more preferably 0.5 to 20 g/10 minutes. However, the ethylene-vinyl alcohol copolymer having a melting point in the vicinity of 190°C or above 190°C is measured under a load of 21.18 N at a plurality of temperatures higher than the melting point. The measured values are plotted on a single logarithmic chart with a reciprocal of absolute temperature on an abscissa axis and a logarithm of MFR on an ordinate axis. The melt flow rate is expressed as a value extrapolated at 190°C.

It is preferable that the resin film layer made from the modified ethylene-vinyl alcohol copolymer as a material have an oxygen permeation amount of 3×10⁻¹⁵ cm³·cm/cm²·sec·Pa or less at 20°C and 65 RH%, more preferably 7×10⁻¹⁶ cm³·cm/cm²·sec·Pa or less, and still more preferably 3×10⁻¹⁶ cm³·cm/cm²·sec·Pa or less.

In the laminate of the present invention, the layer having at least a resin film layer (A) (hereinafter, sometimes abbreviated as "resin film-containing layer") preferably has a layer having excellent water resistance and excellent adhesiveness to rubber besides the above-mentioned resin film layer; in particular, it is preferable to arrange a thermoplastic urethane elastomer layer on an external layer portion of a multilayer film.
The thermoplastic urethane elastomers (hereinafter, sometimes abbreviated as "TPU") are elastomers having a urethane group (-NH-COO-) in the molecule and is produced by an intramolecular reaction of three components, i.e., (1) a polyol (long-chain diol), (2) a diisocyanate, and (3) short-chain diol. The polyol and the short-chain diol undergo addition reaction with a diisocyanate to produce a linear polyurethane. Among the components, polyol will constitute a soft segment and the diisocyanate and the short-chain diol will constitute a hard segment. The properties of TPU depend on the properties, polymerization conditions, and blending ratios of materials and among those factors, the type of polyol gives a great influence on the properties of TPU. Most of the basic characteristics are determined based on the type of the long-chain diol but the hardness of the linear polyurethane is adjusted by the proportion of the hard segment.
The types of the polyol include (a) caprolactone type (polylactone ester polyol obtained by ring opening of caprolactone), (b) adipic acid type (=adipate type), which is an adipic acid ester polyol between adipic acid and glycol, and (c) PTMG (polytetramethylene glycol) type (=ether type), which is polytetramethylene glycol obtained by ring opening polymerization of tetrahydrofuran.

In the laminate of the present invention, the method of molding a resin film that constitutes the layer (A) is not particularly limited. In the case of a monolayer film, conventional methods, for example, a solution casting method, a melt extrusion method, and a calendering method can be adopted. Among these methods, melt extrusion methods such as a T-die method and an inflation extrusion method are preferable. In the case of a multilayer film, a lamination method by coextrusion is preferably used.
In the laminate of the present invention, the thickness of the resin film layer-containing layer (A) is preferably 200 µm or less from the viewpoint of thinned gauge when the laminate is used as an inner liner. If the thickness of the layer (A) is too small, the effect of bonding the layer (A) to the layer (B) maybe insufficient. Therefore, the lower limit of the thickness of the layer (A) is about 1 µm; a more preferable thickness of the layer (A) is in the range of 10 to 150 µm, and still more preferably 20 to 100 µm.
In the laminate of the present invention, the resin film layer that constitutes the resin film layer-containing layer (A) includes one or more layers of the modified ethylene-vinyl alcohol copolymer. In particular, preferred is a layer composed of a multilayer film containing a thermoplastic urethane elastomer layer as the layer other than the resin film layer.

A specific example of the multilayer film is a three-layered multilayer film that includes a resin film made of the modified ethylene-vinyl alcohol copolymer having on each side thereof a thermoplastic urethane elastomer film.
The resin film layer-containing layer that constitutes the layer (A) may be surface-treated on at least adhesive layer side thereof by an oxidation method or a roughening method as desired in order to improve adhesion with an adhesive layer to be provided thereon. Examples of the oxidation method include corona discharge treatment, plasma discharge treatment, chromic acid treatment (wet type), flame treatment, hot air treatment, and ozone/ultraviolet ray irradiation treatment. Examples of the roughening method include a sand blasting method and a solvent treatment method. Those surface treatment methods may be selected appropriately depending on the type of the base film. Generally, a corona discharge treatment method is preferably used from the viewpoints of effect and manageability.

In the laminate of the present invention, the rubber elastomer which constitutes the layer (B) preferably used is rubber elastomer layer that contains a rubber component containing 50 mass% or more butyl rubber. Examples of the butyl rubbers include butyl rubber and/or halogenated butyl rubber. Among the butyl rubbers, halogenated butyl rubber is preferable from the viewpoints of high vulcanization rate, excellent heat resistance, adhesion, and compatibility with other unsaturated rubbers.
The halogenated butyl rubbers include chlorinated butyl rubber, brominated butyl rubber, and other modified rubbers. A specific example of the chlorinated butyl rubber is "Enjay Butyl HT10-66" (manufactured by Enjay Chemical Co., trademark) and a specific example of the brominated butyl rubber is "Bromobutyl 2255" (manufactured by Exxon Co., trademark). Further, modified rubbers which can be used include chlorinated or brominated modified copolymers of isomonoolefin and paramethylstyrene, and are commercially available as, for example, "Expro 50" (manufactured by Exxon Co., trademark).
A preferable content of butyl rubbers in the rubber components of the rubber elastomer is 70 to 100 mass% from the viewpoint of air permeability resistance and the rubber components may contain 0 to 50 mass%, preferably 0 to 30 mass% of diene rubbers or epichlorohydrin rubber.

Examples of diene rubber include natural rubber, isoprene-synthetic rubber (IR), cis-1,4-polybutadiene (BR), syndioctactic-1,2-polybutadiene (1,2 BR), styrene-butadiene rubber (SBR), acrylonitrile-butadiene rubber (NBR), and chloroprene rubber (CR).
On the other hand, examples of epichlorohydrin rubber include epichlorohydrin homopolymer rubber, rubber of epichlorohydrin and ethyleneoxide copolymer, rubber of epichlorohydrin and allylglycidyl-ether copolymer, and epichlorohydrin, ethyleneoxide, and allylglycidyl-ether ternary copolymer rubber. Each of those may be used in the present invention.
In the present invention, the diene rubbers and epichlorohydrin rubber may be used singly or two or more kinds thereof may be used in combination.

The rubber elastomer may contain besides the rubber components an inorganic filler in order to improve, for example, air permeation resistance, low temperature crack resistance properties, and bending fatigue resistance. The inorganic filler is preferably lamellar or plate-like. Examples of such inorganic filler include kaolin, clay, mica, feldspar, hydrate complexes of silica and alumina. The content of the inorganic filler is usually in the range of around 10 to 180 mass parts, preferably 20 to 120 mass parts per 100 mass parts of the rubber component.
For increasing the strength of unvulcanized rubber and for other objects, 0 to 50 mass parts, preferably 10 to 50 mass parts of the carbon black per 100 parts of the rubber component may be added to the rubber elastomer.
The type of the carbon black is not particularly limited and may use one that is appropriately selected from those commonly used as a reinforcing filler for conventional rubbers. Examples of such carbon black include FEF, SRF, HAF, ISAF, SAF, and GPF.
In the present invention, the sum of the contents of the inorganic filler and carbon black is in the range of preferably 30 to 200 mass parts, in particular 50 to 140 mass parts per 100 mass parts of the rubber component from the viewpoints of balance among air permeation resistance, bending fatigue resistance, low temperature cracking properties, and processability of the rubber elastomer.

The rubber elastomer may further contain 0 to 5 mass parts of a dispersion improver per 100 mass parts of the rubber component for increasing the dispersibility of the inorganic filler or carbon black in the rubber to improve desirable properties. Examples of the dispersion improver include a silane coupling agent, dimethylstearylamine, and triethanolamine. These may be used singly or two or more of kinds thereof may be used in combination.
Further, when the carbon black is blended in the rubber elastomer, it is preferable that 1 mass part or more, particularly 3 to 20 mass parts of naphthene oils or paraffin oils per 100 mass parts of the rubber component be added to the rubber elastomer. Here, the naphthene oils are preferably one having %C_{N} by ring analysis of 30 or more and the paraffin oils have %Cp of preferably 60 or more.

Further, the rubber elastomer may contain short organic fiber as desired. The short organic fiber contained can suppress exposure of the inner cord occurring when a tire is produced by using a thinned inner liner when the laminate of the present invention is used as the inner liner. The short organic fiber preferably has an average diameter of 1 to 100 µm and an average length of around 0.1 to 0.5 mm. The short organic fiber may be blended with FRP (composite of short fiber and unvulcanized rubber).
The content of the short organic fiber is preferably 0.3 to 15 mass parts per 100 mass parts of the rubber component. The material of the short organic fiber is not particularly limited. Examples of the material include polyamides such as nylon-6 and nylon-66, syndiotactic-1,2-polybutadiene, isotactic polypropylene, and polyethylene. Among those, polyamides are preferable.

Further, to increase the modulus of the short organic fiber-blended rubber, adhesion improver for rubber and fiber, such as hexamethylenetetramine or resorcin, may be blended to the rubber elastomer.
The rubber elastomer may be blended with besides the above-mentioned respective components various chemicals commonly used in rubber industry, for example, vulcanizers, vulcanization accelerators, antioxidants, scorch preventing agents, zinc oxide, and stearic acid as far as the object of the present invention is not damaged.
In the laminate of the present invention, the rubber elastomer that constitutes the layer (B) can be obtained by extruding the rubber composition containing the respective components by a conventional method into a film or sheet form in an unvulcanized stage.
The rubber elastomer layer of the layer (B) in the laminate of the present invention has a thickness of usually 200 µm or more. The upper limit of the thickness of the rubber elastomer layer is determined appropriately depending on the size of the tire, taking into consideration thinned gauge when using the rubber elastomer layer as an inner liner.

When the laminate of the present invention provided with the rubber elastomer layer (B) is applied to an inner liner of a tire, the fact that the resin film layer-containing layer (A) is used in a thinned gauge of 200 µm or less increases bending resistance and fatigue resistance, resulting in that breakage and cracks due to bending deformation when the tire is rolled become difficult to occur. Even when the breakage of the inner liner occurs, the resin film layer-containing layer (A) has good adhesion to the rubber elastomer layer (B) through the adhesive layer (C) described below and is difficult to be peeled, so cracks are difficult to extend, thus causing no great breakage or cracks. Even when breakage or cracks occurr, because the gas barrier performance of the portion where breakage and cracks in the resin film layer-containing layer (A) occurred is supplemented by the rubber elastomer layer (B), it is possible to retain high inner pressure even after the tire is used.

In the laminate of the present invention, the adhesive composition that constitutes the adhesive layer (C) may be one that has a composition containing (a) a rubber component, (b) 0.1 mass part of at least one of poly-p-dinitrosobenzene and 1, 4-phenylenedimaleimide per 100 mass parts of the rubber component as a crosslinking agent or a cross-linking aid.
In the adhesive composition, the rubber component (a) is not particularly limited and may be determined appropriately in order to secure excellent tack and peeling strength by the types of the resin film layer-containing layer (A) and the rubber elastomer layer (B) and their combination. It is preferable that usually 50 mass% or more butyl rubber and/or halogenated butyl rubber or diene rubber be used.
The butyl rubber and/or halogenated butyl rubber or diene rubber is as exemplified in the description of the rubber elastomer that constitutes the layer (B).
As the component (a), one containing 70 to 100 mass% of halogenated butyl rubber is preferable in view of workability and peeling strength of the adhesive layer.

Further, the component (a) preferably contains 10 mass% or more of chlorosulfonated polyethylene. The chlorosulfonated polyethylene (hereinafter, sometimes abbreviated as "CSM") is a synthetic rubber that has a saturated structure not containing double bonds produced by chlorinating and chlorosulfonating polyethylene using chlorine and sulfurous acid gas and is excellent in stabilities such as weatherability, ozone resistance, and heat resistance. CSM is commercially available as "Hyperon", trade name, from DuPont Co. From the viewpoints of increasing peeling strength of the adhesive layer, heat resistance and the like, the component (a) contains preferably 10 to 40 mass% of CSM.
In the present invention, from the viewpoint of peeling strength, in particular, it is preferable that the component (a) contain 70 mass% or more of halogenated butyl rubber, 10 mass% or more of chlorosulfonated polyethylene, and 5 mass% or more of natural rubber and/or isoprene rubber.

To improve the peeling strength of the adhesive composition after heat treatment, the adhesive composition must contain 0.1 mass part or more of at least one of poly-p-dinitrosobenzene and 1,4-phenylenedimaleimide as a crosslinking agent or crosslinking aid for the component (b) per 100 mass parts of the rubber component as the component (a).
Poly-p-dinitrosobenzene is an effective crosslinking agent for rubbers containing few double bonds, such as halogenated butyl rubber. Addition of poly-p-dinitrosobenzene and subsequent heat treatment can prevent cold flow of unvulcanized blend, improve extrudability and physical properties of vulcanized product, and adjust the degree of plasticity.
The crosslinking using 1,4-phenylenedimaleimide generates carbon-to-carbon covalent bonds to increase heat resistance and antioxidant property. In particular, 1,4-phenylenedimaleimide is an effective crosslinking agent for chlorosulfonated polyethylene rubber.
The upper limit of the content of the component (b) per 100 mass parts of the component (a) is not particularly limited and is usually around 30 mass parts. The content of the component (b) is in the range of preferably 1 to 10 mass parts.

As the filler for the component (c) in the adhesive composition, inorganic filler and/or carbon black may be used. Examples of the inorganic filler include silica obtained by a wet process (hereinafter, referred to as "wet-type silica"), aluminum hydroxide, aluminum oxide, magnesium oxide, montmorillonite, mica, smectite, organized montmorillonite, organized mica, and organized smectite. These may be used singly or two or more of them may be used in combination.
On the other hand, carbon black is as exemplified in the description on the rubber elastomer that constitutes the layer (B).
The content of the filler as the component (c) in the adhesive composition is selected in the range of preferably 2 to 50 mass parts, more preferably 5 to 35 mass parts per 100 mass parts of the rubber component as the component (a) in view of tack and peeling strength and the like.

The commercially available adhesive composition containing chlorosulfonated polyethylene as the rubber composition (a), the crosslinking agent and crosslinking aid as the component (b), and the filler as the component (c) includes CHEMLOK 6250 (manufactured by Lord Corp.). CHEMLOK 6250 can be used as a mixture of the components (a), (b), and (c) of the adhesive composition.

The vulcanization accelerator contained as the component (d) in an amount of 0.1 mass part or more per 100 mass parts of the rubber component allows the resultant laminate to exhibit a desired peeling strength. The vulcanization accelerator is not particularly limited and may be at least one selected from, for example, thiuram compounds, substituted dithiocarbamate compounds, guanidine compounds, thiazole compounds, sulfenamide compounds, thiourea compounds, and xanthate compounds. Among those, thiuram and/or substituted dithiocarbamate vulcanization accelerators are preferable. The upper limit of the content of the vulcanization accelerator is not particularly limited and usually is around 5 mass parts. A preferable content of the vulcanization accelerator is in the range of 0.3 to 3 mass parts.

The thiuram and/or substituted dithiocarbamate vulcanization accelerators contained in the adhesive composition in an amount of 0.1 mass part or more per 100 mass parts of the rubber component allows the resultant laminate to exhibit a desired peeling strength. The upper limit of the content of the vulcanization accelerator is not particularly limited and usually is around 5 mass parts. A preferable content of the vulcanization accelerator is in the range of 0.3 to 3 mass parts.
Examples of thiuram-based vulcanization accelerators include tetramethylthiuram monosulfide, tetramethylthiuram disulfide, activated tetramethylthiuram disulfide, tetraethylthiuram disulfide, tetrabutylthiuram monosulfide, tetrabutylthiuram disulfide, dipentamethylenethiuram tetrasulfide, dipentamethylenethiuram hexasulfide,tetrabenzylthiuram disulfide, and tetrakis (2-ethylhexyl) thiuram disulfide.

On the other hand, examples of dithiocarbamate-based vulcanization accelerators include sodium dimethyldithiocarbamate, sodium diethyldithiocarbamate, sodium di-n-butyl dithiocarbamate, potassium dimethyldithiocarbamate, lead ethyl phenyl dithiocarbamate, zinc dimethyl dithiocarbamate, zinc diethyl dithiocarbamate, zinc di-n-butyl dithiocarbamate, zinc dibenzyl dithiocarbamate, zinc N-pentamethylene dithiocarbamate, zinc ethyl phenyl dithiocarbamate, tellurium diethyl dithiocarbamate, cupric dimethyl dithiocarbamate, and piperidine pentamethylene dithiocarbamate.
In the present invention, at least one selected from the thiuram vulcanization accelerators and the substituted dithiocarbamate vulcanization accelerators are used. Among those, the substituted dithiocarbamate vulcanization accelerators are preferable. In particular, zinc dibenzyldithiocarbamate is suitable.

In the adhesive composition, a resin and/or a low molecular weight polymer is used as the component (e) particularly for increasing the sticking workability (improving tack of the adhesive composition).
Examples of the resin as the component (d) include phenol resins, modified terpene based resins, terpene based resins, hydrogenated terpene based resins, rosin based resins, C₅- and C₉-petroleum resins, xylene resins, coumarone-indene resins, dicyclopentadiene resins, and styrene resins. Among those, C₅-fraction resins, phenol based resins, terpene based resins, modified terpene based resins, hydrogenated terpene based resins, and rosin based resins are suitable.
Examples of the C₅-fraction resins include petroleum resins obtained by polymerization or copolymerization of olefin hydrocarbons obtained by thermal cracking of naphtha, usually 1-pentene, 2-pentene, 2-methyl-1-butene, 2-methyl-2-butene, and 3-methyl-1-butene, and diolefin hydrocarbons such as 2-methyl-1,3-butadiene, 1,2-pentadiene, 1,3-pentadiene, 3-methyl-1,2-butadiene.
Examples of the phenol resin include resins obtained by condensation of p-t-butylphenol and acetylene in the presence of a catalyst and condensate of alkylphenol and formaldehyde.

Further, examples of the terpene based resins, modified terpene based resins, and hydrogenated terpene based resins include terpene based resins such as β-pinene resins and α-pinene resins, hydrogenated terpene based resins obtained by hydrogenation of β-pinene resins and α-pinene resins, modified terpene based resins obtained by reacting terpene and phenol with a Friedel-Crafts type catalyst or by condensing terpene and formaldehyde.
Examples of the based rosin resins include natural rosin resins, and modified rosin derivatives by hydrogenation, disproportionation, dimerization, esterification, limation products of natural resin rosin. Those resins may be used singly or two or more of the resins may be used in combination.

On the other hand, the low molecular weight polymers are those having a weight average molecular weight as the value of corresponding polystyrene as the reference in the range of preferably 1, 000 to 100, 000, more preferably 1, 000 to 50, 000. Those having a double bond in the molecule are preferable and those having a styrene unit are more preferable. Such low molecular weight polymers include styrene-butadiene copolymers.
The low molecular weight styrene-butadiene copolymers can be prepared by copolymerizing butadiene with styrene in a hydrocarbon solvent such as cyclohexane using an organolithium compound initiator in the presence of an ether or a tertiary amine at about 50 to 90°C. The molecular weight of the resultant copolymer can be controlled by the amount of the organolithium compound and the microstructure of the copolymer can be controlled by the amount of the ether or tertiary amine.
In the present invention, the low molecular weight polymers may be used singly or two or more of them may be used in combination as the component (e). Alternatively, at least one of the above-mentioned resins and at least one of the low molecular weight polymers may be used in combination.
In the present invention, the component (e) is used in a proportion of preferably 5 mass parts or more, more preferably 5 to 40 mass parts, or far more preferably 10 to 30 mass parts per 100 mass parts of the rubber component in the component (a).
In particular, the adhesive composition obtained by using a phenol resins as the component (e) is preferable because it exhibits an excellent tack.

The adhesive composition may contain vulcanizers, stearic acid, zinc oxide, and antioxidant, and the like, as required as far as the object of the present invention is not damaged.

Then, the method of producing the laminate of the present invention is described.
First, each component constituting the adhesive composition is added to an organic solvent, dissolved or dispersed to prepare a coating solution made of an adhesive composition containing the organic solvent.
In this case, there is preferably used as the organic solvent an organic solvent having a Hildebrand solubility parameter δ of 14 to 20 MPa^{1/2}, which is a good solvent for the rubber component (a). Examples of such an organic solvent include toluene, xylene, n-hexane, cyclohexane, chloroform, and methyl ethyl ketone. Those may be used singly or two or more of them may be used in combination.
The coating solution thus prepared has a solids concentration, which is selected appropriately taking into consideration coatability and manageability and the like, is in the range of usually 5 to 50 mass%, preferably 10 to 30 mass%.
Then, the coating solution is coated on a surface of a film containing at least a resin film layer that constitutes the layer (A) and dried. Thereafter, on the resultant coating, a rubber elastomer film or sheet that constitutes the layer (B) is applied and the resultant is heated and vulcanized to obtain the laminate of the present invention.

Alternatively, the above-mentioned coating solution is coated on the rubber elastomer film or sheet that constitutes the layer (B) and dried, and then a film containing at least a resin film layer that constitutes the layer (A) is applied on the coating and the resultant is heated and vulcanized to obtain the laminate of the present invention.
Of the two methods, usually the former method is used.
Note that the thickness of the adhesive layer (C) after coating and drying is preferably 1 to 100 µm, more preferably 2 to 30 µm. By setting the thickness of the adhesive layer (C) within the above-mentioned range, excellent adhesion can be obtained and at the same time thinned gauge of the laminate of the present invention can be secured.
In the above-mentioned methods, when the resin film that constitutes the layer (A) has a modified ethylene-vinyl alcohol copolymer layer, it is preferable that the resin film is preliminarily irradiated with energy ray to crosslink the modified ethylene-vinyl alcohol copolymer layer before the resin film and the rubber elastomer film or sheet are applied to each other through the adhesive composition layer. Without this crosslinking operation, the modified ethylene- vinyl alcohol copolymer layer is considerably deformed, so uniform layer cannot be retained and the obtained laminate may not exhibit the predetermined function.
Examples of the energy ray include ionized radiations such as ultraviolet ray, electron beam, X ray, α ray, and γ ray, with electron beam being preferable.
The method of irradiating electron beam includes a method in which a resin film is introduced in an electron beam irradiating apparatus to irradiate electron beam onto the resin film. The dose of the electron beam is not particularly limited and is preferably in the range of 10 to 60 Mrad. When the dose of electron beam irradiated is lower than 10 Mrad, crosslinking tends to be difficult to proceed. On the other hand, when the dose of electron beam is higher than 60 Mrad, the deterioration of the resin film tends to proceed. More preferably, the dose of electron beam is in the range of 20 to 50 Mrad.

The heating and vulcanizing treatment is performed at a temperature of usually 120°C or more, preferably 125 to 200°C, more preferably 130 to 180°C. Note that when the laminate of the present invention is used as an inner liner for a pneumatic tire, the heating and vulcanizing treatment is usually performed when the tire is vulcanized.
The laminate of the present invention has features that it has good tack and that it can be fabricated with good workability and has excellent peeling strength because of using the adhesive composition having a specified composition. Therefore, the laminate of the present invention is advantageously used as an inner liner that can be thinned gauge for a pneumatic tire.
The present invention also provides a tire using the laminate.

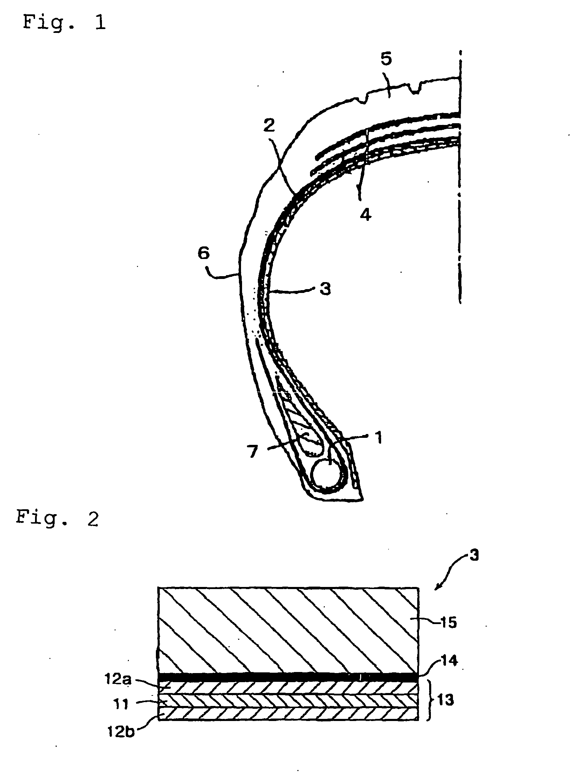

Fig. 1 is a partial cross-sectional view illustrating an example of a pneumatic tire using the laminate of the present invention as an inner liner layer. The tire includes a carcass layer 2 having a carcass ply wound around a bead core 1 with a cord direction being oriented toward a radial direction, an inner liner layer 3 made of the laminate of the present invention arranged inside the carcass layer in the radial direction of the tire, a belt section having two belt layers 4 arranged outside the crown section of the carcass layer in the radial direction of the tire, a tread section 5 arranged above the belt section, and a side wall section 6 arranged on both sides of the tread section.
Fig. 2 is a detailed cross-sectional view illustrating an example of an inner liner layer made of the laminate of the present invention in the pneumatic tire shown in Fig. 1. The inner liner layer (the laminate layer of the present invention) 3 has a structure in which a layer 13 containing a resin film layer having on both sides of a modified ethylene-vinyl alcohol copolymer layer 11 laminated thermoplastic urethane elastomer layers 12a and 12b, respectively, and a rubber elastomer layer 15 are bound and integrated through an adhesive layer 14. The rubber elastomer layer 15 is bound to the carcass layer 2 of Fig. 1 on the side opposite to the side of the adhesive layer 14.

### EXAMPLE

Then, the present invention is described in greater detail by examples. However, the present invention is not considered to be limited by those examples.

### Production Example 1 Production of modified ethylene-vinyl alcohol copolymer

In a pressurized reaction tank were charged 2 mass parts of ethylene-vinyl alcohol copolymer having an ethylene content of 44 mol% and a degree of saponification of 99.9 mol% (MFR: 5.5 g/10 minutes (at 190°C, under a load of 21.18 N)) and 8 mass parts of N-methyl-2-pyrrolidone, and the mixture was heated at 120°C for 2 hours with stirring to completely dissolve the ethylene-vinyl alcohol copolymer. To this was added 0.4 mass part of epoxypropane as the epoxy compound and then the mixture was heated at 160°C for 4 hours. After completion of the heating, the reaction mixture was poured in 100 mass parts of distilled water to deposit the product, which was washed with a large amount of distilled water to sufficiently remove N-methyl-2-pyrrolidone and unreacted epoxy propane to obtain a modified ethylene-vinyl alcohol copolymer. Further, the obtained modified ethylene-vinyl alcohol copolymer was divided in a grinder to a particle size of around 2 mm and again sufficiently washed with a large amount of distilled water. The particles after the washing were dried in vacuum at room temperature for 8 hours and then melted at 200°C and pelletized using a biaxial extruder.

### Production Example 2 Fabrication of three-layer film

Using the modified EVOH obtained in Production Example 1 and thermoplastic polyurethane (manufactured by Kuraray Co., Ltd., KURAMILON 3190) as the elastomer, a three-layer film (thermoplastic polyurethane layer/modified EVOH layer/thermoplastic polyurethane layer) was fabricated in a two-type-three-layer coextruder under the following coextrusion molding conditions. The thicknesses of the respective layers are 20 µm for the modified EVOH layer and the thermoplastic polyurethane layer.
The coextrusion molding conditions are as follows.
Layer constitution:
Thermoplastic polyurethane/ modified EVOH / Thermoplastic polyurethane
(Thickness 20/20/20, unit: µm)
Extrusion temperature of each resin:
C1/C2/C3/die = 170/170/220/220°C

Specifications of extruder for each resin:

Thermoplastic polyurethane:
25 mm Φ Extruder P25-18AC (manufactured by Osaka Seiki)
Modified EVOH:
20 mm Φ Extruder Laboratory-type ME Model CO-EXT (manufactured by Toyo Seiki Seisaku-sho, Ltd.)
T-Die specifications:
Two-kind three-layer extrusion of 500 mm width (manufactured by PLABOR Co., Ltd.)
Temperature of cooling roll: 50°C
Drawing speed: 4 m/min

### Production Example 3 Fabrication of unvulcanized rubber elastomer sheet

A rubber composition having the following composition was prepared and a 500-µm-thick unvulcanized rubber elastomer sheet was fabricated.
Rubber composition (composition unit: part by weight)
Br-IIR (Bromobutyl 2244 manufactured by JSR Corp.): 100
GPF carbon black (#55 manufactured by Asahi Carbon Co., Ltd.): 60
SUNPAR 2280 (manufactured by Japan Sun Oil Co., Ltd.): 7
Stearic acid (manufactured by ADEKA Corp.): 1
Nocceler DM (manufactured by Ouchishinko Chemical Industrial Co., Ltd.): 1.3
Zinc oxide (manufactured by Hakusui Tech Co., Ltd.): 3
Sulfur (manufactured by Tsurumi Chemical Corp.): 0.5

### Production Example 4 Production of low molecular weight SBR

In a nitrogen purged reaction vessel having an inner volume of 5 liters were charged 2, 000 g of cyclohexane, 400 g of butadiene, 100 g of styrene, and 30 g of tetrahydrofuran and then 3.75 g of n-butyllithium was added thereto and polymerization reaction was carried out at 80°C. When the polymerization conversion rate reached 100%, 0.7 g of di-ter-butyl p-cresol per 100 g of the copolymer was added as the antioxidant. The mixture was subjected to desolvation drying treatment by a conventional method to obtain a low molecular weight SBR having a weight average molecular weight of 10,000 as the value of corresponding polystyrene as the reference.

### Examples 1 to 10

100 mass parts of rubber component of the type shown in Table 1, filler of the type and amount shown in Table 1, 1 mass part of stearic acid, 3 mass parts of zinc white, 20 mass parts of C₅-fraction petroleum resin (manufactured by Nippon Zeon Co., Ltd., Quinton A100), 0.5 part of vulcanization accelerator DM (manufactured by Ouchi Shinko Chemical Industry Co., Ltd. , NOCCELER DM), 1 mass part of vulcanization accelerator D (manufactured by Ouchi Shinko Chemical Industry Co., Ltd., NOCCELER D), thiuram vulcanization accelerators or dithiocarbamate vulcanization accelerators of the type and amount shown in Table 1, and 1.5 mass parts of sulfur were kneaded by a conventional method and the adhesive composition was added to 1,000 mass parts of toluene as organic solvent (δ: 18.2 MPa^{1/2}) and dissolved or dispersed to prepare each adhesive coating solution.
Using an electron beam irradiating apparatus "Curetron EBC200-100 for Production", manufactured by Nisshin High-Voltage Co. Ltd., the three-layer film obtained in Production Example 2 was irradiated with electron beam under conditions of acceleration voltage: 200 kV, irradiation energy of 30 Mrad to perform crosslinking treatment. Thereafter, the adhesive coating solution was coated on one side of the three-layer film and dried. Then, the unvulcanized rubber elastomer sheet obtained in Production Example 3 was applied thereon.
Then, the resultant was heated and vulcanized at 160°C for 15 minutes to fabricate each laminate illustrated in Fig. 2.

### Comparative Example 1

A laminate was prepared in the same manner as those in Examples 1 to 10 except that METALOC R-46 manufactured by Toyo Chemical Laboratories was used.
The adhesive coating solutions prepared in Examples 1 to 10 and the commercially available adhesive used in Comparative Example 1 were subjected to probe tack tests according to JIS Z0237 to measure tack and the results were expressed in index with taking the tack of Comparative Example 1 as 100.
Further, the laminates fabricated in Examples 1 to 10 and Comparative Example 1 were subjected to T-type peeling tests according to JIS K6854 to measure peeling strength, and the results were expressed in index taking the peeling strength of Comparative Example 1 as 100.
The results obtained are shown in Table 1.

[Table 1]

**Table 1-1**

| | | Comparative example 1^{*1} | Example 1 | Example 2 | Example 3 | Example 4 | Example 5 |
|---|---|---|---|---|---|---|---|
| Rubber component (Mass part) | Br-IIR^{*2} | - | 80 | 100 | 80 | 80 | 80 |
| | IR^{*3} | - | 20 | - | 10 | 10 | 10 |
| | Chlorosulfonated polyethylene⁴ | - | - | - | 10 | 10 | 10 |
| Filler (Mass part) | Carbon black^{*5} | - | 30 | 30 | 30 | 10 | 30 |
| | Wet-type silica^{*6} | - | - | - | - | - | 10 |
| | Magnesium oxide^{*7} | - | - | - | - | - | - |
| Thiuram/dithiocar bamate vulcanization accelerator (Mass part) | ZTC^{*8} | - | 1 | 1 | 1 | 1 | 1 |
| | TOT^{*9} | - | - | - | - | - | - |
| | TBzTD^{*10} | - | - | - | - | - | - |
| Crosslinking agent/crosslinking aid (Mass part) | Poly-p-dinitrosobenzene^{*11} | - | 1 | 1 | 1 | 1 | 1 |
| | 1,4-Phenylenedimaleimide^{*12} | - | 1 | 1 | 1 | 1 | 1 |
| Evaluation (Index) | Tack | 100 | 150 | 177 | 148 | 168 | 172 |
| | Peeling strength | 100 | 115 | 111 | 117 | 109 | 108 |

| | | | | | | | |
|---|---|---|---|---|---|---|---|
| *1 Commercially available adhesive METALOC R-46 manufactured by Toyo Chemical Laboratories was used. | | | | | | | |

[Table 2]

**Table 1-2**

| | | Example 6 | Example 7 | Example 8 | Example 9 | Example 10 |
|---|---|---|---|---|---|---|
| Rubber component (Mass part) | Br-IIR | 80 | 80 | 80 | 80 | 80 |
| | IR | 10 | 10 | 10 | 10 | 10 |
| | Chlorosulfonated polyethylene⁴ | 10 | 10 | 10 | 10 | 10 |
| Filler (Mass part) | Carbon black^{*5} | 25 | 30 | 30 | 30 | 30 |
| | Wet-type silica^{*6} | - | - | - | - | - |
| | Magnesium oxide^{*7} | 5 | - | - | - | - |
| Thiuram/dithiocarbamate vulcanization accelerator (Mass part) | ZTC | - | 0.5 | 2 | - | - |
| | TOT | - | - | - | 1 | - |
| | TBzTD | - | - | - | - | 1 |
| Crosslinking agent/crosslinking aid (Mass part) | Poly-p-dinitrosobenzene^{*11} | 1 | 1 | 1 | 1 | 1 |
| | 1,4-Phenylenedimaleimide^{*12} | 1 | 1 | 1 | 1 | 1 |
| Evaluation (Index) | Tack | 169 | 155 | 142 | 146 | 146 |
| | Peeling strength | 110 | 110 | 119 | 108 | 108 |

(Notes)
*1. Commercially available adhesive: Metalock R-46 manufactured by Toyo Chemical
*2. Br-IIR : Bromobutyl rubber, Bromobutyl 2244 manufactured by JSR Corp.
*3. IR: isoprene synthetic rubber, IR2200 manufactured by JSR Corp.
*4. Chlorosulfonated Polyethylene: Hypalon H-20 manufactured by DuPont Dow Elasromers LLC Corp.
*5. Carbon black : Asahi #80 manufactured by Asahi Carbon Co., Ltd.
*6. Wet Silica : AQ manufactured by Tosoh Silica Corp.
*7. Magnesium Oxide : Starmag U manufactured by Ueshima Chemical Corp.
*8. ZTC: Zinc dibenzyl dithiocarbamate, Nocceler ZTC manufactured by Ouchi-Shinko Chemical Industrial Co., Ltd.
*9. TOT: Tetrakis(2-ethylhexyl)thiuram disulfide, Nocceler-TOT-N manufactured by Ouchi-Shinko Chemical Industrial Co., Ltd.
*10. TBzTD: Tetrabenzylthiuram disulfide, Sanceler-TBzTD manufactured by Sanshin Chemical Industry Co., Ltd.
*11. Poly-p-dinitrobenzene: Vulnoc DNB manufactured by Ouchi-Shinko Chemical Industrial Co., Ltd.
*12. 1,4-Phenylenedimaleimide: Vulnoc PM manufactured by Ouchi-Shinko Chemical Industrial Co., Ltd.

### Examples 11 to 26

100 mass parts of rubber component of the type and amount shown in Table 2, filler of a type and amount shown in Table 2, phenol resin or low molecular weight polymer, 1 mass part of stearic acid, 3 mass parts of zinc white, 0.5 mass part of vulcanization accelerator DM (manufactured by Ouchi Shinko Chemical Industry Co., Ltd., NOCCELER DM), 1 mass part of vulcanization accelerator D (manufactured by Ouchi Shinko Chemical Industry Co., Ltd., NOCCELER D), thiuram vulcanization accelerators or dithiocarbamate vulcanization accelerators of the type and amount shown in Table 2, and 1.5 mass parts of sulfur were kneaded by a conventional method and the adhesive composition was added to 1, 000 mass parts of toluene as organic solvent (δ: 18.2 MPa^{1/2}) and dissolved or dispersed to prepare each adhesive coating solution.
Using an electron beam irradiating apparatus "Curetron EBC200-100 for Production", manufactured by Nisshin High-Voltage Co. Ltd., the three-layer film obtained in Production Example 2 was irradiated with electron beam under conditions of acceleration voltage: 200 kV, irradiation energy of 30 Mrad to perform crosslinking treatment. Thereafter, the adhesive coating solution was coated on one side of the three-layer film and dried. Then, the unvulcanized rubber elastomer sheet obtained in Production Example 3 was applied thereon.
Then, the resultant was heated and vulcanized at 160°C for 15 minutes to fabricate each laminate illustrated in Fig. 2.

### Examples 27

100 mass parts of rubber component of the type and amount shown in Table 2, filler of a type and amount shown in Table 2, phenol resin or low molecular weight polymer, 1 mass part of stearic acid, 3 mass parts of zinc white, 0.5 mass part of vulcanization accelerator DM (manufactured by Ouchi Shinko Chemical Industry Co., Ltd., NOCCELER DM), 1 mass part of vulcanization accelerator D (manufactured by Ouchi Shinko Chemical Industry Co., Ltd., NOCCELER D), thiuram vulcanization accelerators or dithiocarbamate vulcanization accelerators of the type and amount shown in Table 2, and 1.5 mass parts of sulfur were kneaded by a conventional method and the adhesive composition kneaded substance and CHEMLOC 6250 (manufactured by Load Corp.) of the amount shown in Table 2 were added to 1,000 mass parts of toluene as organic solvent (δ: 18.2 MPa^{1/2}) and dissolved or dispersed to prepare each adhesive coating solution.
Using an electron beam irradiating apparatus "Curetron EBC200-100 for Production", manufactured by Nisshin High-Voltage Co. Ltd., the three-layer film obtained in Production Example 2 was irradiated with electron beam under conditions of acceleration voltage: 200 kV, irradiation energy of 30 Mrad to perform crosslinking treatment. Thereafter, the adhesive coating solution was coated on one side of the three-layer film and dried. Then, the unvulcanized rubber elastomer sheet obtained in Production Example 3 was applied thereon.
Then, the resultant was heated and vulcanized at 160°C for 15 minutes to fabricate each laminate illustrated in Fig. 2.

The adhesive coating solution prepared in Examples 11 to 27 and the commercially available adhesive used in Comparative Example 1 were subjected to probe tack tests according to JIS Z0237 to measure tacks, which were expressed in index taking the tack of Comparative Example 1 as 100.
Further, the laminates fabricated in Examples 11 to 27 and Comparative Example 1 were subjected to T-type peeling tests according to JIS K6854 to measure peeling strength and the results were expressed in index taking the peeling strength of Comparative Example 1 as 100.
The results are shown in Table 2.

[Table 3]

**Table 2-1**

| (Mass part) | Comparative example 1^{*1} | Example 11 | Example 12 | Example 13 | Example 14 | Example 15 | Example 16 | Example 17 | Example 18 |
|---|---|---|---|---|---|---|---|---|---|
| Br-IIR | - | 100 | - | 90 | 100 | 90 | 90 | 90 | 90 |
| IIR | - | - | - | - | - | - | - | - | - |
| IR | - | - | 100 | - | - | - | - | - | - |
| Chlorosulfonatedpolyethylene | - | - | - | 10 | - | 10 | 10 | 10 | 10 |
| Carbon black | - | - | - | - | 10 | 10 | 10 | 10 | 10 |
| Wet-type silica | - | - | - | - | - | - | - | - | - |
| Magnesium oxide | - | - | - | - | - | - | - | - | - |
| Phenol resin^{*13} | - | - | - | - | - | - | - | 20 | 20 |
| Low molecular weight polymer^{*14} | - | - | - | - | - | - | - | - | - |
| Poly-p-dinitrosobenzene | - | 3 | 3 | 3 | 3 | 3 | 3 | 3 | 3 |
| 1,4-Phenylenedimaleimide | - | 3 | 3 | 3 | 3 | 3 | 3 | 3 | 3 |
| ZTC | - | - | - | - | - | - | 1 | 1 | - |
| TOT | - | - | - | - | - | - | - | - | 1 |
| TBzTD | - | - | - | - | - | - | - | - | - |
| CHEMLOC 6250^{*15} | - | - | - | - | - | - | - | - | - |
| Tack (Index) | 100 | 200 | 185 | 185 | 191 | 180 | 180 | 362 | 360 |
| Peeling strength (Index) | 100 | 95 | 96 | 100 | 98 | 105 | 107 | 104 | 106 |

[Table 4]

**Table 2-2**

| (Mass Part) | Example 19 | Example 20 | Example 21 | Example 22 | Example 23 | Example 24 | Example 25 | Example 26 | Example 27* |
|---|---|---|---|---|---|---|---|---|---|
| Br-IIR | 90 | - | - | 90 | 70 | 90 | 90 | 90 | 100 |
| IIR | - | 90 | - | - | - | - | - | - | - |
| IR | - | - | 90 | - | 20 | - | - | - | - |
| Chlorosulfonated polyethylene | 10 | 10 | 10 | 10 | 10 | 10 | 10 | 10 | - |
| Carbon black | 10 | 10 | 10 | 25 | 25 | 10 | 10 | 10 | 10 |
| Wet-type silica | - | - | - | - | - | 5 | - | - | - |
| Magnesium oxide | - | - | - | - | - | - | 5 | - | - |
| Phenol resin | 20 | 20 | 20 | 20 | 20 | 20 | 20 | - | 20 |
| Low molecular weight polymer | - | - | - | - | - | - | - | 20 | - |
| Poly-p-dinitrosobenzene | 3 | 3 | 3 | 3 | 3 | 3 | 3 | 3 | - |
| 1,4-Phenylenedimaleimide | 3 | 3 | 3 | 3 | 3 | 3 | 3 | 3 | - |
| ZTC | - | 1 | 1 | 1 | 1 | 1 | 1 | 1 | 1 |
| TOT | - | - | | - | - | | - | - | - |
| TBzTD | 1 | - | - | - | - | - | - | - | - |
| CHEMLOC 6250 | - | - | - | - | - | - | - | - | 140 |
| Tack (Index) | 356 | 356 | 358 | 320 | 310 | 340 | 342 | 358 | 360 |
| Peeling strength (Index) | 104 | 110 | 109 | 115 | 120 | 115 | 112 | 117 | 107 |

| | | | | | | | | | |
|---|---|---|---|---|---|---|---|---|---|
| *Comparative example | | | | | | | | | |

(Notes)
*13. Phenol resin: PR-SC-400 manufactured by Sumitomo Bakelite Co., Ltd.
*14. Low molecular weight polymer: low molecular weight SBR manufactured in Manufacturing Example 4 (weight-average molecular mass = 10,000).
*15. Chemlok 6250 manufactured by Lord Corp.

### Industrial Applicability

The laminate of the present invention is a laminate that includes a resin film layer and a rubber elastomer layer bound and integrated through an adhesive layer. The laminate has good workability during its production process and excellent peeling strength, so is advantageously used, for example, as an inner liner for a pneumatic tire.

## Claims

1. A laminate comprising a layer containing at least a resin film (A) and a rubber elastomer layer (B), bound and integrated through an adhesive layer (C), wherein the adhesive composition that constitutes the adhesive layer (C) has a composition comprising:
(a) a rubber component; and
(b) 0.1 mass part or more of at least one of poly-p-dinitrosobenzene and 1,4-phenylenedimaleimide per 100 mass parts of the rubber component as a crosslinking agent or a cross-linking aid.

2. A laminate according to claim 1, wherein the adhesive composition includes 2 to 50 mass parts of a filler (c) per 100 mass.

3. A laminate according to claim 1 or 2, wherein the adhesive composition comprises 10 mass% or more of chlorosulfonated polyethylene as the rubber component (a).

4. A laminate according to any one of claims 1 to 3, wherein the adhesive composition further comprises 50 mass% or more of butyl rubber and/or halogenated butyl rubber as the rubber component (a).

5. A laminate according to any one of claims 1 to 4, wherein the adhesive composition further comprises 0.1 mass part or more of a vulcanization accelerator for rubber (d).

6. A laminate according to claim 5, wherein the vulcanization accelerator for rubber (d) is thiuram and/or substituted dithiocarbamate vulcanization accelerator.

7. A laminate according to any one of claims 1 to 6, wherein the adhesive composition further comprises 0.1 mass% or more of at least one of a resin and a low molecular weight polymer (e).

8. A laminate according to any one of claims 1 to 7, wherein the adhesive composition comprises 5 mass parts ormore of an inorganic filler as the filler (c).

9. A laminate according to claim 8, wherein the inorganic filler is at least one selected from the group consisting of silica obtained by a wet process, aluminum hydroxide, aluminum oxide, magnesium oxide, montmorillonite, mica, smectite, organized montmorillonite, organized mica, and organized smectite.

10. A laminate according to any one of claims 1 to 9, wherein the adhesive composition comprises a carbon black as the filler (c).

11. A laminate according to any one of claims 7 to 10, wherein the resin in the component (e) is selected from the group consisting of C₅-fraction based resins, phenol based resins, terpene based resins, modified terpene based resins, hydrogenated terpene based resins, and rosin based resins.

12. A laminate according to claim 11, wherein the resin is a phenol based resin.

13. A laminate according to any one of claims 7 to 12, wherein the low molecular weight polymer in the component (e) has a weight average molecular weight of 1,000 to 100,000 as the value of corresponding polystyrene as the reference.

14. A laminate according to claim 13, wherein the lowmolecular weight polymer has a weight average molecular weight of 1,000 to 50, 000 as the value of corresponding polystyrene as the reference.

15. A laminate according to any one of claims 7 to 14, wherein the low molecular weight polymer in the component (e) is a polymer having a double bond in the molecule.

16. A laminate according to any one of claims 7 to 15, wherein the low molecular weight polymer in the component (e) is a polymer containing a unit of styrene.

17. A laminate according to claim 16, wherein the low molecular weight polymer is styrene-butadiene copolymer.

18. A laminate according to any one of claims 1 to 17, wherein the layer containing at least a resin film layer (A) has a thickness of 200 µm or less and the rubber elastomer layer (B) has a thickness of 200 µm or more.

19. A laminate according to any one of claims 1 to 18, wherein the layer containing at least a resin film layer (A) is a single layer or a multilayer film layer containing one or more layers of modified ethylene-vinyl alcohol copolymer.

20. A laminate according to claim 19, wherein the layer containing at least a resin film layer (A) is a layer made of a multilayer film containing a thermoplastic urethane elastomer layer.

21. A laminate according to any one of claims 1 to 20, wherein the rubber elastomer that constitutes the rubber elastomer layer (B) contains a rubber component that contains 50 mass% or more of butyl rubber.

22. A laminate according to claim 21, wherein the butyl rubber comprises butyl rubber and/or halogenated butyl rubber.

23. A laminate according to any one of claims 1 to 22, wherein the thickness of the adhesive layer (C) is 1 to 100 µm.

24. A method of producing the laminate of any one of claims 1 to 23, comprising:
coating a coating solution including an adhesive composition containing an organic solvent on a surface of a film containing at least a resin film layer;
drying the coating;
applying a rubber elastomer film or sheet on the dried coating; and
heating and vulcanizing the rubber elastomer film or sheet.

25. A method of producing the laminate of any one of claims 1 to 23, comprising:
coating a coating solution including an adhesive composition containing an organic solvent on a surface of a rubber elastomer film or sheet;
drying the coating;
applying a film containing at least a resin film layer on the dried coating; and
heating and the vulcanizing the rubber elastomer film.

26. A method of producing the laminate according to claim 24 or 25, wherein the organic solvent has a Hildebrand solubility parameter δ in the range of 14 to 20 MPa^{1/2}.

27. A method of producing the laminate according to any one of claims 24 to 26, wherein the heating and vulcanizing are performed at a temperature of 120°C or more.

28. A tire comprising the laminate of any one of claims 1 to 23.

## Patentansprüche

1. Laminat, das eine Schicht aufweist, die mindestens einen Harzfilm (A) und eine Gummi-Elastomer-Schicht (B) enthält, mittels einer Klebeschicht (C) gebunden und integriert, wobei die Klebstoffzusammensetzung, die die Klebeschicht (C) bildet, eine Zusammensetzung aufweist, umfassend:
(a) eine Gummikomponente; und
(b) 0,1 Masse-Teil oder mehr von mindestens einem von Poly-p-dinitrosobenzol und 1,4-Phenylendimaleinsäureimid pro 100 Masse-Teile der Gummikomponente als ein Vernetzungsmittel oder ein Vemetzungshilfsmittel.

2. Laminat nach Anspruch 1, bei dem die Klebstoffzusammensetzung 2 bis 50 Masse-Teile eines Füllstoffes (c) pro 100 Masse-Teile umfasst.

3. Laminat nach Anspruch 1 oder 2, bei dem die Klebstoffzusammensetzung 10 Masse-% oder mehr von chlorsulfoniertem Polyethylen als die Gummikomponente (a) aufweist.

4. Laminat nach einem der Ansprüche 1 bis 3, bei dem die Klebstoffzusammensetzung außerdem 50 Masse-% oder mehr von Butylkautschuk und/oder halogeniertem Butylkautschuk als die Gummikomponente (a) aufweist.

5. Laminat nach einem der Ansprüche 1 bis 4, bei dem die Klebstoffzusammensetzung außerdem 0,1 Masse-Teil oder mehr eines Vulkanisationsbeschleunigers für Gummi (d) aufweist.

6. Laminat nach Anspruch 5, bei dem der Vulkanisatonsbeschleuniger für Gummi (d) Thiuram und/oder ein substituierter Dithiocarbamat-Vulkanisationsbeschleuniger ist

7. Laminat nach einem der Ansprüche 1 bis 6, bei dem die Klebstoffzusammensetzung außerdem 0,1 Masse-% oder mehr von mindestens einem von einem Harz und einem Polymer (e) mit niedriger relativer Molekülmasse aufweist.

8. Laminat nach einem der Ansprüche 1 bis 7, bei dem die Klebstoffzusammensetzung 5 Masse-Teile oder mehr eines anorganischen Füllstoffes als Füllstoff (c) aufweist.

9. Laminat nach Anspruch 8, bei dem der anorganische Füllstoff mindestens einer ist, der aus der Gruppe ausgewählt wird, die besteht aus: Siliciumoxid, das mittels eines Nassverfahrens erhalten wird; Aluminiumhydroxid; Aluminiumoxid; Magnesiumoxid; Montmorillonit; Glimmer; Smektit; organisiertem Momtmorillonit; organisiertem Glimmer; und organisiertem Smektit.

10. Laminat nach einem der Ansprüche 1 bis 9, bei dem die Klebstoffzusammensetzung einen Ruß als Füllstoff (c) aufweist.

11. Laminat nach einem der Ansprüche 7 bis 10, bei dem das Harz in der Komponente (e) aus der Gruppe ausgewählt wird, die besteht aus: Harzen auf C₅-Fraktionsbasis; Harzen auf Phenolbasis; Harzen auf Terpenbasis; modifizierten Harzen auf Terpenbasis; hydrierten Harzen auf Terpenbasis; und Harzen auf Terpentinharzbasis.

12. Laminat nach Anspruch 11, bei dem das Harz ein Harz auf Phenolbasis ist.

13. Laminat nach einem der Ansprüche 7 bis 12, bei dem das Polymer mit niedriger relativer Molekülmasse in der Komponente (e) ein Gewichtsmittel des Molekulargewichtes von 1000 bis 100000 als der Wert des entsprechenden Polystyrols als die Bezugsgröße aufweist.

14. Laminat nach Anspruch 13, bei dem das Polymer mit niedriger relativer Molekülmasse ein Gewichtsmittel des Molekulargewichtes von 1000 bis 50000 als der Wert des entsprechenden Polystyrols als die Bezugsgröße aufweist.

15. Laminat nach einem der Ansprüche 7 bis 14, bei dem das Polymer mit niedriger relativer Molekülmasse in der Komponente (e) ein Polymer ist, das eine Doppelbindung im Molekül aufweist.

16. Laminat nach einem der Ansprüche 7 bis 15, bei dem das Polymer mit niedriger relativer Molekülmasse in der Komponente (e) ein Polymer ist, das eine Styroleinheit enthält.

17. Laminat nach Anspruch 16, bei dem das Polymer mit niedriger relativer Molekülmasse ein Styrol-Butadien-Copolymer ist.

18. Laminat nach einem der Ansprüche 1 bis 17, bei dem die Schicht, die mindestens eine Harzfilmschicht (A) enthält, eine Dicke von 200 µm oder weniger aufweist, und bei dem die Gummi-Elastomer-Schicht (B) eine Dicke von 200 µm oder mehr aufweist.

19. Laminat nach einem der Ansprüche 1 bis 18, bei dem die Schicht, die mindestens eine Harzfilmschicht (A) enthält, eine einschichtige oder eine mehrschichtige Filmschicht ist, die eine oder mehrere Schichten des modifizierten Ethylen-Vinylalkohol-Copolymers enthält.

20. Laminat nach Anspruch 19, bei dem die Schicht, die mindestens eine Harzfilmschicht (A) enthält, eine Schicht ist, die aus einem Mehrschichtfilm besteht, der eine thermoplastische Urethan-Elastomer-Schieht enthält.

21. Laminat nach einem der Ansprüche 1 bis 20, bei dem das Gummielastomer das die Gummi-Elastomer-Schicht (B) bildet, eine Gummikomponente enthält, die 50 Masse-% oder mehr Butylkautschuk enthält.

22. Laminat nach Anspruch 21, bei dem der Butylkautschuk einen Butylkautschuk und/oder halogenierten Butylkautschuk aufweist.

23. Laminat nach einem der Anspruche 1 bis 22, bei dem die Dicke der Klebeschicht (C) 1 bis 100 µm beträgt.

24. Verfahren zur Herstellung eines Laminates nach einem der Ansprüche 1 bis 23, das die folgenden Schritte aufweist:
Auftragen einer Beschichtungslösung, die eine Klebstoffzusammensetzung umfasst, die ein organisches Lösungsmittel enthält, auf eine Oberfläche eines Filmes, der mindestens eine Harzfilmschicht enthält;
Trocknen der Beschichtung;
Aufbringen eines Gummi-Elastomer-Filmes oder -Folie auf die getrocknete Beschichtung; und
Erwärmen und Vulkanisieren des Gummi-Elastomer-Filmes oder -Folie.

25. Verfahren zur Herstellung eines Laminates nach einem der Ansprüche 1 bis 23, das die folgenden Schritte aufweist:
Auftragen einer Beschichtungslösung, die eine Klebstoffzusammensetzung umfasst, die ein organisches Lösungsmittel enthält, auf eine Oberfläche eines Gummi-Elastomer-Filmes oder-Folie;
Trocknen der Beschichtung;
Aufbringen eines Filmes, der mindestens eine Harzfilmschicht enthält, auf die getrocknete Beschichtung; und
Erwärmen und Vulkanisieren des Gummi-Elastomer-Filmes.

26. Verfahren zur Herstellung des Laminates nach Anspruch 24 oder 25, bei dem das organische Lösungsmittel einen Hildebrand-Löslichkeitsparameter δ im Bereich von 14 bis 20 MPa^{1/2} aufweist.

27. Verfahren zur Herstellung des Laminates nach einem der Ansprüche 24 bis 26, bei dem die Schritte des Erwärmens und des Vulkanisieren bei einer Temperatur von 120 °C oder mehr durchgeführt werden.

28. Reifen, der das Laminat nach einem der Ansprüche 1 bis 23 aufweist.

## Revendications

1. Stratifié, comprenant une couche contenant au moins un film de résine (A) et une couche d'élastomère de caoutchouc (B), reliée et intégrée par l'intermédiaire d'une couche adhésive (C), la composition adhésive constituant la couche adhésive (C) ayant une composition comprenant :
(a) un composant de caoutchouc ; et
(b) 0,1 partie en masse ou plus d'au moins une substance, un poly-p-dinitrosobenzène ou un 1,4-phénylènedimaléimide pour 100 parties en masse du composant de caoutchouc, comme agent de réticulation ou aide de réticulation.

2. Stratifié selon la revendication 1, dans lequel la composition adhésive englobe 2 à 50 parties en masse d'une charge (c) pour 100 parties en masse.

3. Stratifié selon les revendications 1 ou 2, dans lequel la composition adhésive comprend 10% en masse ou plus de polyéthylène chloro-sulfoné comme composant de caoutchouc (a).

4. Stratifié selon l'une quelconque des revendications 1 à 3, dans lequel la composition adhésive comprend en outre 50% en masse ou plus de caoutchouc butylique et/ou de caoutchouc butylique halogéné comme composant de caoutchouc (a).

5. Stratifié selon l'une quelconque des revendications 1 à 4, dans lequel la composition adhésive comprend en outre 0,1 partie en masse ou plus d'un accélérateur de vulcanisation de caoutchouc (d).

6. Stratifié selon la revendication 5, dans lequel l'accélérateur de vulcanisation de caoutchouc (d) est un accélérateur de vulcanisation à base de thiourame et/ou de dithiocarbamate substitué.

7. Stratifié selon l'une quelconque des revendications 1 à 6, dans lequel la composition adhésive comprend en outre 0,1 % en masse ou plus d'au moins une substance, une résine ou un polymère de faible poids moléculaire (e).

8. Stratifié selon l'une quelconque des revendications 1 à 7, dans lequel la composition adhésive comprend 5 parties en masse ou plus d'une charge inorganique comme charge (c).

9. Stratifié selon la revendication 8, dans lequel la charge inorganique est au moins une substance sélectionnée dans le groupe constitué de silice obtenue par un procédé par voie humide, d'hydroxyde d'aluminium, d'oxyde d'aluminium, d'oxyde de magnésium, de montmorillonite, de mica, de smectite, de montmorillonite organisée, de mica organisé et de smectite organisée.

10. Stratifié selon l'une quelconque des revendications 1 à 9, dans lequel la composition adhésive comprend un noir de carbone comme charge (c).

11. Stratifié selon l'une quelconque des revendications 7 à 10, dans lequel la résiné dans le composant (e) est sélectionnée dans le groupe constitué de résines à base d'une fraction C₅, de résines à base de phénol, de résines à base de terpène, de résines à base de terpène modifié, de résines à base de terpène hydrogéné et de résines à base de colophane.

12. Stratifié selon la revendication 11, dans lequel la résine est une résine à base de phénol.

13. Stratifié selon l'une quelconque des revendications 7 à 12, dans lequel le polymère à faible poids moléculaire dans le composant (e) a un poids moléculaire moyen compris entre 1.000 et 100.000, constituant la valeur du polystyrène correspondant servant de référence.

14. Stratifié selon la revendication 13, dans lequel le polymère à faible poids moléculaire a un poids moléculaire moyen compris entre 1.000 et 50.000, constituant la valeur du polystyrène correspondant servant de référence.

15. Stratifié selon l'une quelconque des revendications 7 à 14, dans lequel le polymère à faible poids moléculaire dans le composant (e) est un polymère comportant une double liaison dans la molécule.

16. Stratifié selon l'une quelconque des revendications 7 à 15, dans lequel le polymère à faible poids moléculaire dans le composant (e) est un polymère contenant une unité de styrène.

17. Stratifié selon la revendication 16, dans lequel le polymère à faible poids moléculaire est un copolymère styrène-butadiène.

18. Stratifié selon l'une quelconque des revendications 1 à 17, dans lequel la couche contenant au moins une couche d'un film de résine (A) a une épaisseur de 200 µm ou moins, la couche d'élastomère de caoutchouc (B) ayant une épaisseur de 200 µm ou plus.

19. Stratifié selon l'une quelconque des revendications 1 à 18, dans lequel la couche contenant au moins une couche d'un film de résine (A) est une couche individuelle ou une couche de film multicouches, contenant une ou plusieurs couches d'un copolymère modifié d'éthylène alcool de vinyle.

20. Stratifié selon la revendication 19, dans lequel la couche contenant au moins une couche d'un film de résine (A) est une couche composée d'un film multicouches, contenant une couche d'élastomère d'uréthane thermoplastique.

21. Stratifié selon l'une quelconque des revendications 1 à 20, dans lequel l'élastomère de caoutchouc constituant la couche d'élastomère de caoutchouc (B) continent un composant de caoutchouc contenant 50% en masse ou plus de caoutchouc butylique.

22. Stratifié selon la revendication 21, dans lequel le caoutchouc butylique comprend du caoutchouc butylique et/ou du caoutchouc butylique halogéné.

23. Stratifié selon l'une quelconque des revendications 1 à 22, dans lequel l'épaisseur de la couche adhésive (c) est comprise entre 1 et 100 µm.

24. Procédé de production du stratifié selon l'une quelconque des revendications 1 à 23, comprenant les étapes ci-dessous :
revêtement d'une solution de revêtement englobant une composition adhésive contenant un solvant organique sur une surface d'un film contenant au moins une couche d'un film de résine ;
séchage du revêtement ;
application d'un film ou d'une feuille d'élastomère de caoutchouc sur le revêtement séché ; et
chauffage et vulcanisation du film ou de la feuille d'élastomère de caoutchouc.

25. Procédé de production du stratifié selon l'une quelconque des revendications 1 à 23, comprenant les étapes ci-dessous :
revêtement d'une solution de revêtement englobant une composition adhésive contenant un solvant organique sur une surface d'un film ou d'une feuille d'élastomère de caoutchouc;
séchage du revêtement ;
application d'un film contenant au moins une couche d'un film de résine sur le revêtement séché ; et
chauffage et vulcanisation du film d'élastomère de caoutchouc.

26. Procédé de production du stratifié selon les revendications 24 ou 25, dans lequel le solvant organique présente un paramètre de solubilité selon Hildebrand δ compris dans l'intervalle allant de 14 à 20 MPa^{1/2}.

27. Procédé de production du stratifié selon l'une quelconque des revendications 24 à 26, dans lequel les étapes de chauffage et de vulcanisation sont exécutées en présence d'une température de 120° ou plus.

28. Bandage pneumatique, comprenant le stratifié selon l'une quelconque des revendications 1 à 23.
